# EUROPEAN PATENT APPLICATION

(11) **EP 4 618 000 A1**
(43) Date of publication of application: **17.09.2025**
(21) Application number: 23888016.5
(22) Date of filing: 07.11.2023
(51) Int. Cl.: G06T 5/50

(54) **VEHICLE BODY MATTING-BASED IMAGE PROCESSING METHOD, APPARATUS, ELECTRONIC DEVICE AND MEDIUM**

(30) Priority: 11.11.2022 CN 202211409467
(71) Applicant: Nio Smart Technology Co., Ltd., Shanghai 201800 (CN)
(72) Inventor: LIAO, Shengyang, Shanghai 201804 (CN)
(74) Representative: Vossius & Partner Patentanwälte Rechtsanwälte mbB
(86) International application number: PCT/CN2023/130281
(87) International publication number: WO 2024/099327

(57) **Abstract**

, A vehicle body matting-based image processing method of the present invention comprises: acquiring an original image photographed by a camera; acquiring a connected region of a vehicle body based on the original image; performing directional convolution on the original image based on the connected region, to obtain a directional convolution result; performing blur processing on the connected region, to obtain a first image; and determining a second image based on the first image, the original image and the directional convolution result. As such, the vehicle image effect of creative photographing of speeding ahead is achieved, improving the user experience.

## Description

This application claims priority of China patent application CN202211409467.2 titled "VEHICLE BODY MATTING-BASED IMAGE PROCESSING METHOD, APPARATUS, ELECTRONIC DEVICE AND MEDIUM" filed on November 11, 2022, the entirety of which is incorporated into the present application by reference.

### TECHNICAL FIELD

The present invention relates to the technical field of image processing, and in particular to a vehicle body matting-based image processing method and apparatus, an electronic device and a medium.

### BACKGROUND

With the rapid development of social economy, the acceleration of urban development course, the continuous increase of urban population and the continuous improvement of people's living standards, the status of vehicles in our lives is getting higher and higher. However, the existing commercially available mobile phones cannot achieve vehicle-related creative photographing of speeding ahead, leading to poor user experience.

Accordingly, there is a need in this field for a new vehicle body matting-based image processing solution to solve the problem as described above.

### SUMMARY

In order to overcome the above defects, the present invention is proposed to solve or at least partially solve the above technical problem. The present invention provides a vehicle body matting-based image processing method and apparatus, an electronic device and a medium.

In a first aspect, the present invention provides a vehicle body matting-based image processing method, which includes: acquiring an original image photographed by a camera; acquiring a connected region of a vehicle body based on the original image; performing directional convolution on the original image based on the connected region, to obtain a directional convolution result; performing blur processing on the connected region, to obtain a first image; and determining a second image based on the first image, the original image and the directional convolution result.

In an implementation, acquiring a connected region of a vehicle body based on the original image includes: matting a vehicle body region from the original image; extracting all connected regions from the vehicle body region; determining whether the number of all the connected regions is greater than zero; and taking, in the case where the number of all the connected regions is greater than zero, the connected region with the largest area as the connected region of the vehicle body.

In an implementation, matting a vehicle body region from the original image includes: matting the vehicle body region from the original image using a MODNet model.

In an implementation, performing directional convolution on the original image based on the connected region, to obtain a directional convolution result includes: performing circumscribed rectangle fitting on the connected region, to obtain a circumscribed rectangular image; calculating an included angle between the long side of the circumscribed rectangular image and the horizontal direction; determining whether the included angle is within a preset angle range; and performing, in the case where the included angle is within the preset angle range, directional convolution on the original image based on the included angle and the radius of a convolution kernel, to obtain the directional convolution result.

In an implementation, the preset angle range is [-60°, 60°].

In an implementation, performing blur processing on the connected region, to obtain a first image, includes: performing blur processing on the connected region using Box Blur technology, to obtain the first image.

In an implementation, determining a second image based on the first image, the original image and the directional convolution result includes: performing nonlinear mixing on the original image and the directional convolution result based on the first image, to obtain the second image.

In a second aspect, the present invention provides a vehicle body matting-based image processing apparatus, which includes:
a first acquisition module, configured to acquire an original image photographed by a camera;
a second acquisition module, configured to acquire a connected region of a vehicle body based on the original image;
a directional convolution module, configured to perform directional convolution on the original image based on the connected region, to obtain a directional convolution result;
a blur processing module, configured to perform blur processing on the connected region, to obtain a first image; and
a determination module configured to determine a second image based on the first image, the original image and the directional convolution result.

In a third aspect, there is provided an electronic device including a processor and a storage configured to store a plurality of program codes, where the program codes are configured to be loaded and executed by the processor to perform the vehicle body matting-based image processing method as described in any of the foregoing.

In a fourth aspect, there is provided a computer-readable storage medium storing a plurality of program codes, where the program codes are configured to be loaded and executed by a processor to perform the vehicle body matting-based image processing method as described in any of the foregoing.

One or more technical solutions of the present invention as described above have at least one or more beneficial effects as follow:
the vehicle body matting-based image processing method of the present invention includes: firstly, acquiring an original image photographed by a camera, and then acquiring a connected region of a vehicle body based on the original image; secondly, performing directional convolution on the original image based on the connected region to obtain a directional convolution result, and performing blur processing on the connected region to obtain a first image; and finally, determining a second image based on the first image, the original image and the directional convolution result. As such, a creative image of speeding ahead in which the vehicle is running forward is obtained, improving the user experience.

### BRIEF DESCRIPTION OF DRAWINGS

The disclosure of the present invention will become easier to understand with reference to the accompanying drawings. It will be easily understood by those skilled in the art that these accompanying drawings are merely for illustration purposes and are not intended to limit the protection scope of the present invention. In addition, like numerals are used to represent like parts in the figures, in which:
Fig. 1 is a schematic flow diagram of main steps of a vehicle body matting-based image processing method according to an embodiment of the present invention;
Fig. 2 is a schematic diagram of an original image in an embodiment;
Fig. 3 is a schematic diagram of a vehicle body region in an embodiment;
Fig. 4 is a schematic diagram of a largest connected region in an embodiment;
Fig. 5 is a schematic diagram of a circumscribed rectangular image in an embodiment;
Fig. 6 is a schematic diagram of an image subjected to blur processing in an embodiment;
Fig. 7 is a schematic diagram of a second image in an embodiment;
Fig. 8 is a full schematic flow diagram of an image processing method in an embodiment;
Fig. 9 is a main structural block diagram of a vehicle body matting-based image processing apparatus according to an embodiment of the present invention; and
Fig. 10 is a schematic structural diagram of an electronic device in an embodiment.

### List of Reference Numerals:

11: First Acquisition Module; 12: Second Acquisition Module; 13: Directional convolution Module; 14: Blur processing Module; 15: Determination Module.

### DETAILED DESCRIPTION

Some implementations of the present invention are described below with reference to the accompanying drawings. It should be understood by those skilled in the art that these embodiments are merely used to explain the technical principle of the present invention, and are not intended to limit the protection scope of the present invention.

In the description of the present invention, "module" and "processor" can include hardware, software or a combination of both. A module can include either hardware circuits, such as various suitable sensors, communication ports and memories, or software parts, such as program codes, or a combination of software and hardware. The processor can be a central processing unit, a microprocessor, an image processor, a digital signal processor or any other suitable processor. The processor possesses data and/or signal processing functionalities. The processor can be implemented in software, hardware or a combination of both. Non-transitory computer-readable storage medium includes any suitable medium that can store program codes, such as magnetic disc, hard disk, optical disc, flash memory, read-only memory, random access memory, and the like. The term of "A and/or B" represents all possible combinations of A and B, such as A only, B only, or both A and B. The term of "at least one A or B" or "at least one of A and B" has a similar meaning to "A and/or B", and can include A only, B only, or both A and B. The singular terms of "a" and "this" can also encompass plural forms.

With the rapid development of social economy, the acceleration of urban development course, the continuous increase of urban population and the continuous improvement of people's living standards, the status of vehicles in our lives is getting higher and higher. However, the existing commercially available mobile phones cannot achieve vehicle-related creative photographing of speeding ahead, leading to poor user experience.

Therefore, the present application provides a vehicle body matting-based image processing method and apparatus, an electronic device and a medium. The method includes: firstly, acquiring an original image photographed by a camera, and then acquiring a connected region of a vehicle body based on the original image; secondly, performing directional convolution on the original image based on the connected region to obtain a directional convolution result, and performing blur processing on the connected region to obtain a first image; and finally, determining a second image based on the first image, the original image and the directional convolution result. As such, a creative image of speeding ahead in which the vehicle is running forward is obtained, drawing close the emotional distance between the user and the vehicle, and improving the user experience.

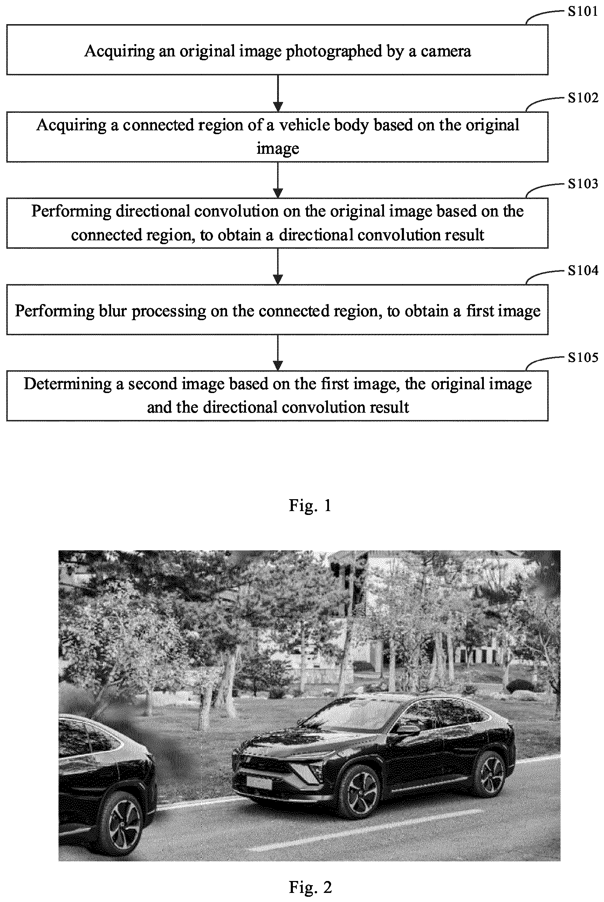

Referring to Fig. 1, Fig. 1 is a schematic flow diagram of main steps of a vehicle body matting-based image processing method according to an embodiment of the present invention.

As shown in Fig. 1, the vehicle body matting-based image processing method in the embodiment of the present invention mainly includes steps S101 - S105 as follows.

Step S101: acquiring an original image photographed by a camera.

Exemplarily, Fig. 2 can serve as an example of the original image, but is not limited thereto.

Step S102: acquiring a connected region of a vehicle body based on the original image.

In a specific implementation, acquiring a connected region of a vehicle body based on the original image includes: matting a vehicle body region from the original image; extracting all connected regions from the vehicle body region; determining whether the number of all the connected regions is greater than zero; and taking, in the case where the number of all the connected regions is greater than zero, the connected region with the largest area as the connected region of the vehicle body.

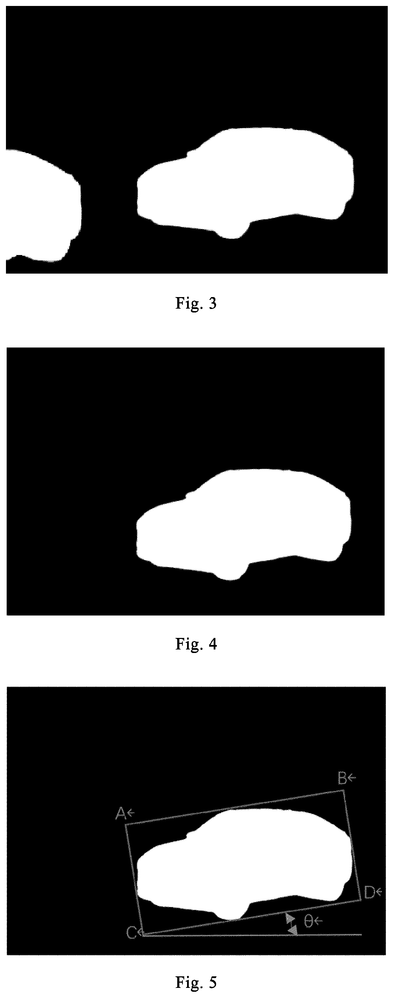

Specifically, firstly, a vehicle body region is matted from an original image photographed by a camera. Exemplarily, Fig. 3 can serve as an example of the vehicle body region matted from the original image as shown in Fig. 2, but is not limited thereto. Then, all connected regions are extracted from the vehicle body region, and a decision is made whether the number of all the connected regions is greater than zero. If the number of all the connected regions is greater than zero, a subsequent decision is made whether the number of all the connected regions is equal to 1. If the number of all the connected regions is equal to 1, meaning that there is only one connected region, then this connected region is taken as the connected region of the vehicle body. Or, if the number of all the connected regions is not equal to 1, then the connected region with the largest area is taken as the connected region of the vehicle body, as specifically shown in Fig. 4.

In a specific implementation, matting a vehicle body region from the original image includes: matting the vehicle body region from the original image using a MODNet model.

Specifically, in an embodiment, the vehicle body region is matted from the original image using a MODNet model, but the vehicle body region is not limited to be matted using the MODNet model, namely, the vehicle body region can also be matted using other deep learning models. The MODNet model is a real-time matting model, which is capable of accurately matting an object from an image.

Step S103: performing directional convolution on the original image based on the connected region, to obtain a directional convolution result.

In a specific implementation, performing directional convolution on the original image based on the connected region, to obtain a directional convolution result includes: performing circumscribed rectangle fitting on the connected region, to obtain a circumscribed rectangular image; calculating an included angle between the long side of the circumscribed rectangular image and the horizontal direction; determining whether the included angle is within a preset angle range; and performing, in the case where the included angle is within the preset angle range, directional convolution on the original image based on the included angle and the radius of a convolution kernel, to obtain the directional convolution result.

Specifically, in an embodiment, after the connected region of the vehicle body is acquired based on the aforementioned step S102, circumscribed rectangle fitting is performed on the connected region of the vehicle body to obtain a circumscribed rectangular image. Exemplarily, Fig. 5 can serve as an example of obtaining the smallest circumscribed rectangle by performing circumscribed rectangle fitting on the connected region of the vehicle body, but is not limited thereto.

Then, an included angle *θ* between the long side (such as CD side) of the circumscribed rectangular image and the horizontal direction is calculated; a decision is made whether the included angle *θ* is within a preset angle range; in the case where the included angle *θ* is within the preset angle range, directional convolution is performed on the original image based on the included angle *θ* and the radius r of a convolution kernel to obtain a directional convolution result. In this regard, the size of the convolution kernel can be determined by the user according to the actual situation, which is not limited herein. The radius of the convolution kernel can be obtained after the convolution kernel is selected. For example, for a 5*5 convolution kernel, the radius of the convolution kernel is 2.

The preset angle range may be a predetermined angle range. In an implementation, the preset angle range is [-60°, 60°].

As such, the circumscribed rectangle is fitted based on the vehicle body, and the angle *θ* of the directional convolution is acquired, so that the direction of convolution is more accurate, more in line with the direction in which the vehicle is travelling, and most accurately expresses a speeding ahead artistic conception in which the vehicle is running forward, thereby improving the user experience.

Step S104: performing blur processing on the connected region, to obtain a first image.

In a specific implementation, performing blur processing on the connected region, to obtain a first image, includes: performing blur processing on the connected region using Box Blur technology, to obtain the first image.

The Box Blur technology is a fast mean blur technology. Compared with the traditional convolution blur, the Box Blur can accomplish blur processing on an image more efficiently, thereby providing a basic support for subsequent acquisition of a second image.

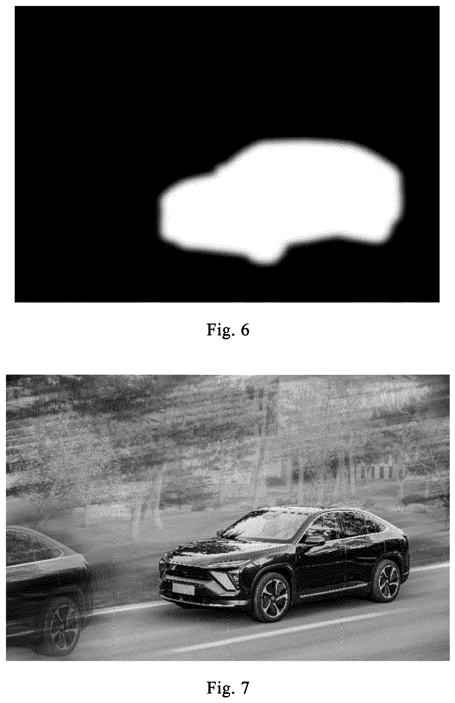

In an embodiment, Fig. 6 can serve as an example of the first image derived from the blur processing, but is not limited thereto.

Step S105: determining a second image based on the first image, the original image and the directional convolution result.

In a specific implementation, determining a second image based on the first image, the original image and the directional convolution result includes: performing nonlinear mixing on the original image and the directional convolution result based on the first image, to obtain the second image. Exemplarily, Fig. 7 can serve as an example of the second image, but is not limited thereto, which embodies a creative effect of vehicle speeding ahead.

Based on the above steps S101 - S105, firstly, an original image photographed by a camera is acquired, and then a connected region of a vehicle body is acquired based on the original image; secondly, directional convolution is performed on the original image based on the connected region to obtain a directional convolution result, and blur processing is performed on the connected region to obtain a first image; and finally, a second image is determined based on the first image, the original image and the directional convolution result. As such, a creative image of speeding ahead in which the vehicle is running forward is obtained, drawing close the emotional distance between the user and the vehicle, and improving the user experience.

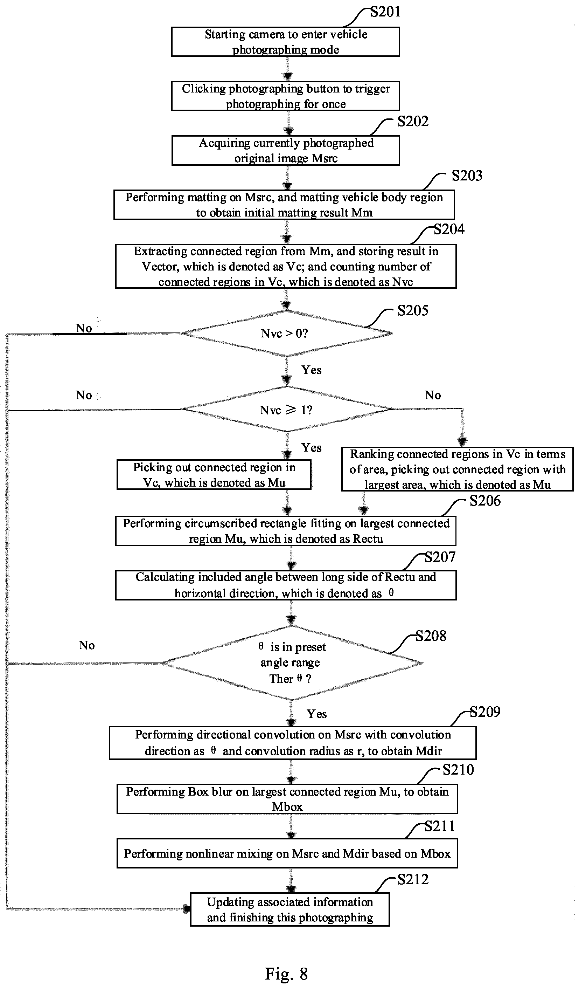

In an embodiment, as specifically shown in Fig. 8, the vehicle body matting-based image processing method is illustrated in detail.

S201: starting a camera to enter a vehicle photographing mode, and clicking a photographing button to trigger photographing for once.

S202: acquiring a currently photographed original image Msrc.

S203: performing matting on the original image Msrc, and matting a vehicle body region from the image, to obtain an initial matting result Mm.

S204: extracting a connected region from the initial matting result Mm, and storing the extracted result of connected region in Vector, which is denoted as Vc; and counting the number of connected regions in Vc, which is denoted as Nvc.

In this regard, Vector is a part of C++ Standard Template Library (STL), and is considered as a container because it is capable of storing various types of objects like a container. To put it simply, Vector is a dynamic array capable of storing any type of data, and can add and compress data.

S205: determining whether Nvc is greater than 0, and proceeding, in the case where Nvc is not greater than 0, meaning that there is no vehicle in the image screen, to step S212; or subsequently determining whether Nvc is equal to 1 in the case where Nvc is greater than 0, and picking, if Nvc is equal to 1, meaning that there is only one connected vehicle region, out the connected region of the vehicle body in Vc, which is denoted as Mu, and proceeding to step S206, or ranking, if Nvc is not equal to 1, meaning that there are multiple connected vehicle regions, the connected regions in Vc in terms of area, picking out the connected region with the largest area as the connected region Mu of the vehicle body, and proceeding to step S206.

S206: performing circumscribed rectangle fitting on the connected region Mu of the vehicle body or the largest connected region Mu, to obtain a circumscribed rectangular image as shown in Fig. 5, i.e., Rectu.

S207: calculating an included angle between the long side of Rectu and the horizontal direction, which is denoted as *θ*, where the specific calculation formula is: *θ* = *arctan*[(*Y_{D} - Y_{C}*)/(*X_{D} - X_{C}*)]*.*

S208: determining whether *θ* is within a preset angle range, and proceeding, if so, to S209, otherwise, proceeding to S212.

S209: performing directional convolution on the original image Msrc with the convolution direction as *θ* and the radius of the convolution kernel as r, to obtain a directional convolution result Mdir. Specifically, the directional convolution can be implemented by means of the following steps: 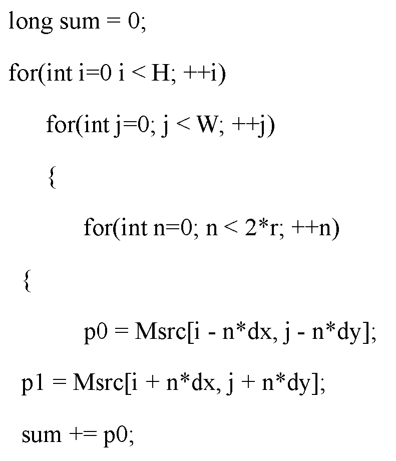 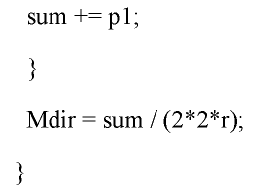 where H is the height of the original image, W is the width of the original image, Mdir is the result subjected to convolution, dx is the step pitch in the x direction, dx=r*cos (*θ*), dy is the step pitch in the y direction, and dy=r*sin (*θ*).

S210: performing Box blur processing on the largest connected region Mu, to obtain a first image Mbox.

S211: performing nonlinear mixing on the original image Msrc and the directional convolution result Mdir based on the first image Mbox, to obtain a second image, that is, a creative image of speeding ahead. Specifically, the nonlinear mixing can be implemented by means of the following steps:

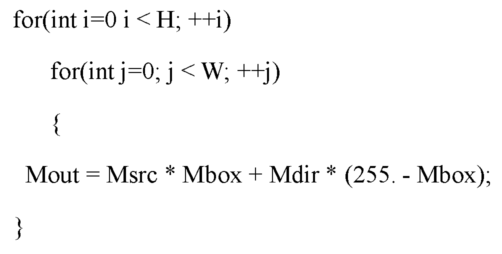

S212: updating image information and finishing photographing for this time.

The angle *θ* of directional convolution is obtained by matting the vehicle region from the original image and then performing circumscribed rectangle fitting on the matted vehicle body region. Then directional convolution is performed on the original image based on the angle *θ* and the radius r of a convolution kernel, thereby resulting in an image with creative effect of speeding ahead. Therefore, the problem that the electronic devices such as the existing commercially available mobile phones lack vehicle-related creative photographing schemes, leading to poor user experience is solved, thereby improving the user experience.

It should be pointed out that although various steps are described in a particular order in the above embodiments, it can be understood by those skilled in the art that in order to achieve the effect of the present invention, different steps are not necessarily to be performed in such order, but can be performed concurrently (in parallel) or in another order, and such variations fall within the protection scope of the present invention.

Furthermore, the present invention also provides a vehicle body matting-based image processing apparatus.

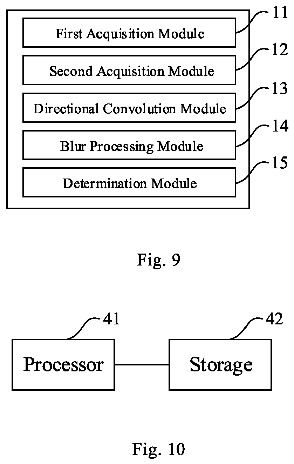

Referring to Fig. 9, Fig. 9 is a main structural block diagram of a vehicle body matting-based image processing apparatus according to an embodiment of the present invention.

As shown in Fig. 9, the vehicle body matting-based image processing apparatus in the embodiment of the present invention mainly includes a first acquisition module 11, a second acquisition module 12, a directional convolution module 13, a blur processing module 14 and a determination module 15. In some embodiments, one or more of the first acquisition module 11, the second acquisition module 12, the directional convolution module 13, the blur processing module 14, and the determination module 15 may be merged into one module.

In some embodiments, the first acquisition module 11 may be configured to acquire an original image photographed by a camera;
the second acquisition module 12 may be configured to acquire a connected region of a vehicle body based on the original image;
the directional convolution module 13 may be configured to perform directional convolution on the original image based on the connected region, to obtain a directional convolution result;
the blur processing module 14 may be configured to perform blur processing on the connected region, to obtain a first image; and
the determination module 15 may be configured to determine a second image based on the first image, the original image and the directional convolution result.

In an implementation, the description of the specifically implemented functionalities can refer to the steps S101 - S105.

The vehicle body matting-based image processing apparatus as described above is used to perform the embodiment of the vehicle body matting-based image processing method as shown in Fig. 1. The technical principles, the solved technical problems and the generated technical effects of the two are similar. Those skilled in this technical field can clearly understand that for the convenience and conciseness of description, the specific working process and associated illustration of the vehicle body matting-based image processing apparatus can refer to the contents as described in the embodiment of the vehicle body matting-based image processing method, which will not be detailed here.

It can be understood by those skilled in the art that all or some of the processes in the method of one embodiment described above, which are implemented by the present invention, can also be accomplished by instructing associated hardware through a computer program. The computer program can be stored in a computer-readable storage medium, and when executed by a processor, can cause the processor to implement the steps of various method embodiments as described above. To this regard, the computer program includes computer program codes, which can be in a form of source code, in a form of object code, in a form of executable file, in some intermediate form, or the like. The computer-readable storage medium can include any entity or apparatus, medium, USB flash disk, mobile hard disk, magnetic disc, optical disk, computer memory, read-only memory, random access memory, electric carrier signal, telecommunication signal, software distribution medium, and the like, which is capable of carrying the computer program codes. It should be noted that the contents contained in the computer-readable storage medium can be appropriately added or removed according to the requirements of legislation and patent practice in the jurisdiction. For example, in some jurisdiction, according to the legislation and patent practice, the computer-readable storage medium does not include electric carrier signals and telecommunication signals.

Furthermore, the present invention also provides an electronic device. In an electronic device embodiment according to the present invention, as shown in Fig. 10, the electronic device includes a processor 41 and a storage 42. The storage can be configured to store a program for performing the vehicle body matting-based image processing method of the above method embodiment, and the processor can be configured to execute a program in the storage, including but not limited to the program for performing the vehicle body matting-based image processing method of the above method embodiment. For the convenience of illustration, only the part that is related to the embodiments of the present invention is shown. For those that have not been disclosed by the specific technical details, please refer to the part of method embodiment of the present invention.

Furthermore, the present invention also provides a computer-readable storage medium. In a computer-readable storage medium embodiment according to the present invention, the computer-readable storage medium can be configured to store a program for performing the vehicle body matting-based image processing method of the above method embodiment, which can be loaded and executed by a processor to implement the vehicle body matting-based image processing method as described above. For the convenience of illustration, only the part that is related to the embodiments of the present invention is shown. For those that have not been disclosed by the specific technical details, please refer to the part of method embodiment of the present invention. The computer-readable storage medium can be a storage device formed by including various electronic devices. Alternatively, the computer-readable storage medium in the embodiment of the present invention is a non-transitory computer-readable storage medium.

Furthermore, it should be understood that since the setting of the respective modules is merely for illustrating the functional units of the apparatus of the present invention, the physical devices corresponding to such modules can be the processor itself, or a part of software, a part of hardware, or a part of a combination of software and hardware, in the processor. Therefore, the number of the respective modules in the figures is merely schematic.

It can be understood by those skilled in the art that the respective modules in the apparatus can be split or merged adaptively. Such splitting or merging of specific modules will not cause the technical solution to deviate from the principle of the present invention, so the technical solutions subjected to the splitting or merging will fall within the protection scope of the present invention.

So far, the technical solution of the present invention has been described in conjunction with the preferred implementations as shown in the accompanying drawings, however, it is easy for those skilled in the art to understand that the protection scope of the present invention is obviously not limited to such specific implementations. On the premise of not deviating from the principle of the present invention, those skilled in the art can make equivalent alterations or substitutions to associated technical features, and the technical solutions subjected to such alterations or substitutions will fall within the protection scope of the present invention.

## Claims

1. A vehicle body matting-based image processing method, **characterized in that** the method comprises:
acquiring an original image photographed by a camera;
acquiring a connected region of a vehicle body based on the original image;
performing directional convolution on the original image based on the connected region, to obtain a directional convolution result;
performing blur processing on the connected region, to obtain a first image; and
determining a second image based on the first image, the original image and the directional convolution result.

2. The vehicle body matting-based image processing method according to claim 1, **characterized in that** acquiring a connected region of a vehicle body based on the original image comprises:
matting a vehicle body region from the original image;
extracting all connected regions from the vehicle body region;
determining whether the number of all the connected regions is greater than zero; and
setting, when the number of all the connected regions is greater than zero, the connected region with the largest area as the connected region of the vehicle body.

3. The vehicle body matting-based image processing method according to claim 2, **characterized in that** matting a vehicle body region from the original image comprises: matting the vehicle body region from the original image using a MODNet model.

4. The vehicle body matting-based image processing method according to claim 1, **characterized in that** performing directional convolution on the original image based on the connected region, to obtain a directional convolution result comprises:
performing circumscribed rectangle fitting on the connected region, to obtain a circumscribed rectangular image;
calculating an included angle between the long side of the circumscribed rectangular image and the horizontal direction;
determining whether the included angle is within a preset angle range; and
performing, when the included angle is within the preset angle range, directional convolution on the original image based on the included angle and the radius of a convolution kernel, to obtain the directional convolution result.

5. The vehicle body matting-based image processing method according to claim 4, **characterized in that** the preset angle range is [-60°, 60°].

6. The vehicle body matting-based image processing method according to claim 1, **characterized in that** performing blur processing on the connected region, to obtain a first image, comprises: performing blur processing on the connected region using Box Blur technology, to obtain the first image.

7. The vehicle body matting-based image processing method according to claim 1, **characterized in that** determining a second image based on the first image, the original image and the directional convolution result comprises: performing nonlinear mixing on the original image and the directional convolution result based on the first image, to obtain the second image.

8. A vehicle body matting-based image processing apparatus, **characterized in that** the apparatus comprises:
a first acquisition module, configured to acquire an original image photographed by a camera;
a second acquisition module, configured to acquire a connected region of a vehicle body based on the original image;
a directional convolution module, configured to perform directional convolution on the original image based on the connected region, to obtain a directional convolution result;
a blur processing module, configured to perform blur processing on the connected region, to obtain a first image; and
a determination module configured to determine a second image based on the first image, the original image and the directional convolution result.

9. An electronic device, comprising a processor and a storage configured to store a plurality of program codes, **characterized in that** the program codes are configured to be loaded and executed by the processor to perform the vehicle body matting-based image processing method according to any of claims 1 to 7.

10. A computer-readable storage medium storing a plurality of program codes, **characterized in that** the program codes are configured to be loaded and executed by a processor to perform the vehicle body matting-based image processing method according to any of claims 1 to 7.
